Europäisches Patentamt

European Patent Office

Office européen des brevets

(19)

(11) Publication number: 0 377 041

A1

# EUROPEAN PATENT APPLICATION
## published in accordance with Art. 158(3) EPC

(21) Application number: 89903220.5

(22) Date of filing: 16.03.89

(86) International application number:
PCT/JP89/00286

(87) International publication number:
WO 89/09435 (05.10.89 89/24)

(51) Int. Cl.5: G05B 19/403, G05B 19/18,
G06F 9/06, G06F 15/16

(30) Priority: 01.04.88 JP 80397/88

(43) Date of publication of application:
11.07.90 Bulletin 90/28

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KURAKAKE, Mitsuo
Izumi Haitsu 103 3-3-10-, Tamadaira
Hino-shi Tokyo 191(JP)
Inventor: MURAOKA, Yutaka Fanuc Dai-3
Vira-karamatsu
3527-1, Shibokusa Oshinomura
Minamitsuru-gun Yamanashi 401-05(JP)

(74) Representative: Brunner, Michael John et al
GILL JENNINGS & EVERY 53-64 Chancery
Lane
London WC2A 1HN(GB)

(54) AUTOMATIC PROGRAMMING DEVICE.

(57) An automatic programming device for preparing NC tapes. The device includes an automatic programming device (10) having an interface (14) with a peripheral unit such as an external memory, an additional device (20) having a processor and a shared RAM and connected to the interface (14) for transferring programs and data to and from the automatic programming device (10), and an external memory (40) connected to the additional device (20). The additional device (20) shares the task processing with the automatic programming device (10). Therefore, the additional device (20) enhances the processing ability of the automatic programming device.

FIG.1

- 1 -

# D E S C R I P T I O N

## AUTOMATIC PROGRAMMING APPARATUS

### Technical Field

The present invention relates to an automatic programming apparatus for preparing an NC tape or the like, and more particularly, to an automatic programming apparatus provided with an additional device for high-speed processing.

### Background Art

Automatic programming apparatuses used for preparing an NC tape or the like have a wide range of applications, from an NC tape preparation for simple planar drilling to that for a complicated three-dimensional machining, and accordingly, range from those with a low processing capacity to those capable of high-speed processing. Thus, one automatic programming apparatus cannot meet various demands of the market. Particularly, the limit of the processing capacity of an automatic programming apparatus is determined from the outset when the apparatus is designed.

Nevertheless, once a user having an automatic programming apparatus of low processing capacity gets used to the operation of the apparatus, he or she begins to desire a faster processing. A new automatic programming apparatus capable of high-speed processing will satisfy this need but this is uneconomical, and from the viewpoint of a proper utilization of the software and the compatibility thereof, an increase of the speed of the same model apparatus is preferable.

Further, automatic programming apparatuses that were considered sufficiently fast when designed are soon made out of date by advances in semiconductor technology. For example, the 16-bit processors now commonly used soon will be made out of date by the 32-bit processors now on the market, and accordingly, automatic programming apparatuses using a 16-bit processor will not satisfy user needs.

Disclosure of the Invention

The present invention has been created in view of the above circumstances, and an object thereof is to provide an automatic programming apparatus provided with an additional device having a high processing capacity.

To achieve the above object, the present invention provides an automatic programming apparatus for preparing an NC tape or the like, which comprises a body of the automatic programming apparatus having an interface for an external storage device or the like, an additional device having a processor and a shared RAM therein and connected to the interface for transmission and reception of a program and data to and from the body of the automatic programming apparatus by using an address space of the interface, and an external storage device connected to the additional device.

The additional device connected to the external interface receives and processes data from the automatic programming apparatus, and therefore, existing automatic programming apparatuses can be used as they are, while improving their processing capacity, and the compatibility of the software, etc. can be maintained.

Brief Description of the Drawings

FIG. 1 is a block diagram showing an automatic programming apparatus according to an embodiment of the present invention; and

FIG. 2 is a block diagram showing details of an additional device.

Best Mode of Carrying Out the Invention

An embodiment of the present invention will be described with the accompanying drawings.

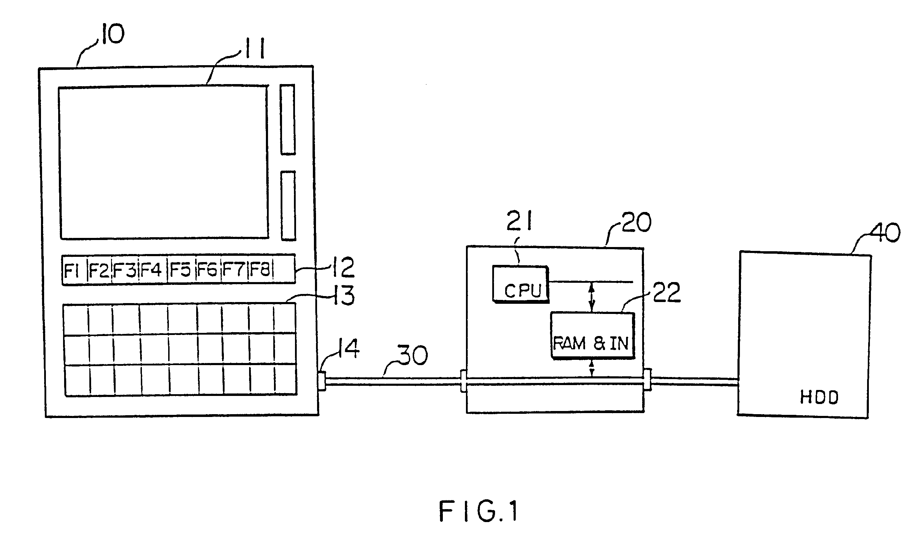

In the block diagram of FIG. 1 showing an automatic programming apparatus according to the embodiment of the invention, 10 denotes a body of the automatic programming apparatus, 11 a display screen, 12 function keys, 13 operating keys, and 14 an interface for connection with an external storage device.

Numeral 20 denotes an additional device which is connected to the interface 14 and comprises a processor 21 and a shared RAM circuit 22, etc., the details of which will be described later; and 40 denotes a hard disk drive used for program files.

For a system configuration requiring a relatively slower processing, the hard disk drive 40 is connected directly to the interface 14, but when the processing capacity of the automatic programming apparatus 10 alone is insufficient, for example, when an NC tape for a three-dimensional shape machining program is to be prepared, the additional device 20 is also connected, whereby the address space for the hard disk drive can be used in such a way that data to be processed is transferred to the additional device 20 and processed by the processor 21, to thereby achieve a faster processing.

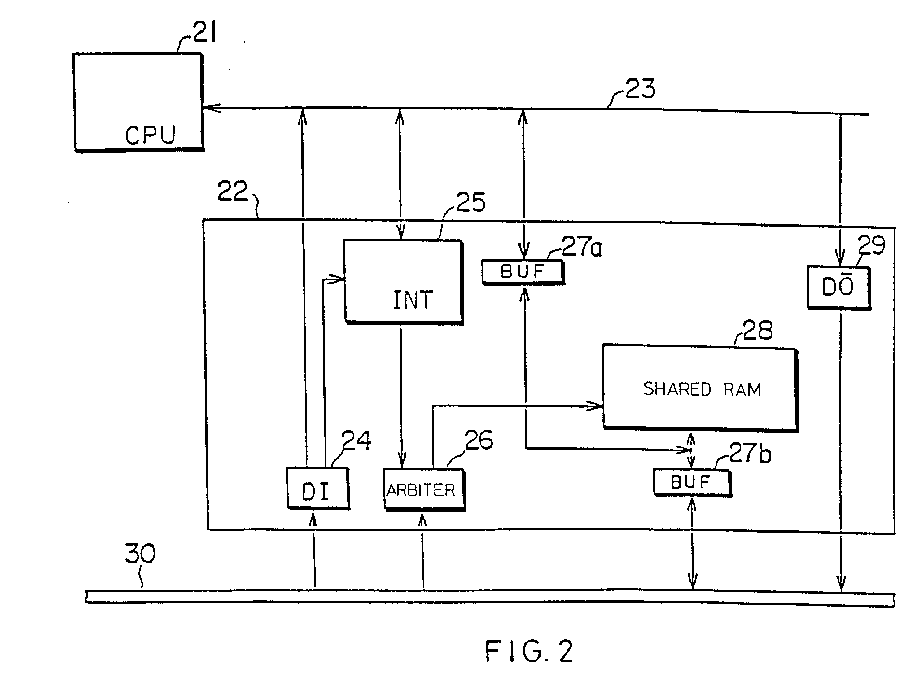

Figure 2 is a block diagram showing details of the additional device, wherein numerals 21 and 22 denote the aforementioned processor and shared RAM circuit, respectively, 23 denotes a bus, and 30 is a bus connected to the body of the automatic programming apparatus. Numeral 24 denotes a DI which receives an interrupt signal from the processor of the automatic programming apparatus, etc.; 25 denotes an interface between the shared RAM circuit 22 and the bus 23; 26 an arbiter for arbitrating the use of the bus 30 by either the processor of the automatic programming apparatus 10 or the shared RAM circuit 22; 27a and 27b denote buffers; 28 denotes a shared RAM for a temporary storage of data and program processed by the processor 21, the processed data being transferred to the automatic programming apparatus 10; and 29 denotes a DO for outputting an interrupt signal to the processor of the automatic programming apparatus 10.

The processing is carried out as follows. When a task must be processed by the processor 21, the processor on the side of the automatic programming apparatus 10 sends a request to the arbiter 26 for the use of the bus 30 and transfers the program and data to the shared RAM 28 through the bus 30. After the transfer, the processor of the automatic programming apparatus 10 interrupts the processor 21 through the DI 24.

The processor 21 processes the task, stores the processing result in the shared RAM 28, and then interrupts the processor on the side of the automatic programming apparatus 10 through the DO 29. On receiving the interrupt signal, the processor of the automatic programming apparatus 10 reads the processing result stored in the shared RAM 28.

The allotment of processes between the processor of the automatic programming apparatus 10 and the processor 21 may be determined as desired, and programs for the tasks to be processed by the processor 21 may be stored in the shared RAM 28.

An improvement in the overall processing capacity is especially noticeable when the automatic programming apparatus uses a 16-bit processor and the additional device uses a 32-bit processor, while maintaining the compatibility of software. Further, the additional device enables manufacturers to quickly supply systems having a higher processing capacity.

As described above, according to the present invention, an additional device having a processor and a shared RAM is added to an automatic programming apparatus, whereby the processing speed of the automatic programming apparatus can be increased and the compatibility of the software, etc. can be maintained.

CLAIMS

1. An automatic programming apparatus for preparing an NC tape or the like, comprising:

a body of the automatic programming apparatus having an interface for an external storage device or the like;

an additional device having a processor and a shared RAM therein and connected to said interface for a transmission and reception of programs and data to and from said body of the automatic programming apparatus by using an address space of said interface; and

an external storage device connected to said additional device.

2. The automatic programming apparatus according to claim 1, wherein said external storage device comprises a hard disk drive.

3. The automatic programming apparatus according to claim 1, wherein said additional device shares processing operations with a processor of said body of the automatic programming apparatus by means of an interrupt control.

FIG.1

EP 0 377 041 A1

FIG.2

EP 0 377 041 A1

# INTERNATIONAL SEARCH REPORT

International Application No **PCT/JP89/00286**

## I. CLASSIFICATION OF SUBJECT MATTER (if several classification symbols apply, indicate all) *

According to International Patent Classification (IPC) or to both National Classification and IPC

Int. Cl$^4$  G05B19/403, 19/18, G06F9/06, 15/16

## II. FIELDS SEARCHED

Minimum Documentation Searched *

| Classification System | Classification Symbols |
|---|---|
| IPC | G05B19/403, 19/18, G06F9/06, 15/16 |

Documentation Searched other than Minimum Documentation
to the Extent that such Documents are Included in the Fields Searched *

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT *

| Category * | Citation of Document, ** with indication, where appropriate, of the relevant passages ** | Relevant to Claim No. ** |
|---|---|---|
| A | JP, A, 57-17014 (Fujitsu Fanuc, Ltd.) 28 January 1982 (28. 01. 82) Page 2, upper left column, line 11 to lower right column, line 8 & WO, A, 8200210 & EP, A, 55782 | 1-3 |
| A | JP, A, 59-229611 (Mitsubishi Electric Corporation) 24 December 1984 (24. 12. 84) Page 2, upper right column, line 2 to lower left column, line 4 & DE, A, 3421516 | 1-3 |
| A | JP, A, 61-204758 (Hitachi, Ltd.) 10 September 1986 (10. 09. 86) Page 2, lower left column, line 8 to lower right column, line 1 (Family: none) | 1-3 |

* Special categories of cited documents. **

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| May 19, 1989 (19. 05. 89) | June 5, 1989 (05. 06. 89) |
| International Searching Authority | Signature of Authorized Officer |
| Japanese Patent Office | |

Form PCT ISA/210 (second sheet) (January 1985)